Europäisches Patentamt

European Patent Office

Office européen des brevets

(11) Veröffentlichungsnummer: **0 301 274**
**A2**

## EUROPÄISCHE PATENTANMELDUNG

(21) Anmeldenummer: 88110690.0

(51) Int. Cl.⁴: **H02M 3/335 , H02M 3/337**

(22) Anmeldetag: 05.07.88

(30) Priorität: 25.07.87 DE 3724649

(43) Veröffentlichungstag der Anmeldung:
01.02.89 Patentblatt 89/05

(84) Benannte Vertragsstaaten:
CH DE FR GB IT LI SE

(71) Anmelder: LEYBOLD AKTIENGESELLSCHAFT
Wilhelm-Rohn-Strasse 25
D-6450 Hanau 1(DE)

(72) Erfinder: Sperzel, Wolfgang, Dipl.-Ing.
Heimatfriedering 3 A
D-6460 Gelnhausen-Hailer(DE)
Erfinder: Landwehr, Horst
Eppsteinstrasse 64
D-6450 Hanau 7(DE)
Erfinder: Stürmer, Johann
Pestalozzistrasse 8
D-6463 Freigericht 1(DE)
Erfinder: Thomas, Friedrich-Werner, Dr.-Ing.
Schwarzwaldweg 2
D-6460 Gelnhausen 2(DE)
Erfinder: Hubertus, Guido
Am Gänsborn 30
D-6203 Hochheim(DE)

(74) Vertreter: Schickedanz, Willi, Dipl.-Ing.
Langener Strasse 68
D-6050 Offenbach/Main(DE)

(54) Einrichtung für eine unipolar betriebene elektrische Schaltungskomponente.

(57) Die Erfindung betrifft eine Einrichtung (20) für eine unipolar betriebene energiespeicherfähige Komponente (9). Diese Einrichtung (20) kann beispielsweise bei einer asymmetrischen Halbbrückenschaltung (1) Anwendung finden. Sie kompensiert den Gleich-Magnetfluß, der durch den unipolaren Betrieb entsteht, und ermöglicht somit, daß die energiespeicherfähige Komponente (9) relativ klein ausgebildet werden kann. Die Verwendung eines Stromwandlers (25, 32) mit geeignetem Wickelverhältnis als automatisches und lastabhängiges Kompensationsmittel gestattet darüber hinaus eine sehr flexible Anpassung an Belastungsänderungen. Eine solche Anpassung ist insbesondere dann erforderlich, wenn sehr hohe pulsierende Ströme auf der Primärseite bei gleichzeitigem sekundärem Leerlauf auftreten.

FIG.2

## EINRICHTUNG FÜR EINE UNIPOLAR BETRIEBENE ELEKTRISCHE SCHALTUNGSKOMPONENTE

Die Erfindung betrifft eine Einrichtung für eine unipolar betriebene elektrische Schaltungskomponente, die magnetische Energie speichern kann, wobei der von dieser Komponente erzeugte magnetische Fluß durch einen überlagerten magnetischen Fluß verändert wird.

Um elektrische Gleichstrom-Verbraucher aus einem Wechsel- oder Drehstromnetz zu betreiben, werden im allgemeinen steuerbare Gleichrichterschaltungen mit Anpaßtransformatoren und nachgeschalteten Siebmitteln verwendet. Das Bauvolumen dieser Anpaßtransformatoren und Siebmittel ist allerdings bei einer 50 Hz-Netzwechselspannung relativ groß, weshalb man hochfrequente Zerhacker von zum Beispiel 20 KHz verwendet, deren Ausgangswechselspannung gleichgerichtet wird; mittels Pulsbreitenmodulation ist es außerdem möglich, aus einer aus dem Netz erzeugten festen Gleichspannung eine variable Gleichspannung zu erzeugen. Als Zerhacker kommen entweder asymmetrische Halbbrücken- oder symmetrische Vollbrückenschaltungen in Verbindung mit streuarmen Transformatoren zur Anwendung (vgl. Thomson CSF, Handbuch II, Transistor in der Leistungselektronik, Kapitel XIII, Joel Redouty, Grundlagen für die Entwicklung eines Schaltnetzteils für den Betrieb am 380 V-Netz, S. 225 - 241). Diese beiden Wandler-Schaltungen zeigen ein grundsätzlich unterschiedliches Verhalten. Der Grund hierfür besteht darin, daß die Vollbrückenschaltung einen symmetrischen Wandler darstellt, in dem der magnetische Fluß bipolar ist. Der magnetische Arbeitspunkt beschreibt hierbei einen zum Nullpunkt symmetrischen Zyklus, und der Mittelwert des Flusses im Kern ist gleich Null.

Die Halbbrückenschaltung arbeitet asymmetrisch, d.h. der magnetische Fluß ist unipolar, weil der magnetische Arbeitspunkt bzw. magnetische Fluß hierbei einen Zyklus in nur einem Quadranten beschreibt und der Mittelwert des Flusses ungleich Null ist. Deshalb wird in einem asymmetrischen Wandler der Transformator in der Energieübertragungsphase magnetisiert, was eine zusätzliche Entmagnetisierungsphase erfordert, in der keine Energie übertragen wird. Im asymmetrischen Wandler kann folglich nur während eines Teils der Periode, z. B. maximal 50 %, eine Energieübertragung erfolgen. Deshalb wird an den Ausgang eines asymmetrischen Wandlers bei einer Gleichstrom-Gleichstrom-Wandlung keine Vollweg-, sondern nur eine Halbweggleichrichterschaltung geschaltet.

Obwohl der symmetrische Wandler gegenüber dem asymmetrischen Wandler entscheidende Vorteile zu haben scheint, wird in der Praxis dennoch oft der asymmetrische Wandler bevorzugt, weil ein symmetrischer Wandler nie vollständig symmetrisch arbeitet und deshalb aufwendige Symmetrie-Korrekturschaltungen erfordert. Außerdem muß der Transformator im Verhältnis zur theoretischen Dimensionierung größer ausgelegt werden, um eine ungewollte Sättigung zu vermeiden.

Es ist bereits ein geregelter Gleichspannungs-Gleichspannungs-Wandler bekannt, der eine hochfrequente Verbindung verwendet (Ranganathan, Ziogas und Stefanovich: A Regulated DC-DC Voltage Source Converter Using a High Frequency Link, IEEE Transactions on Industry Applications, Band IA-18, No. 3, Mai/Juni 1982, S. 279-287). Diese hochfrequente Verbindung weist eine Halbbrückenschaltung mit zwei Thyristoren und zwei Dioden auf, welche eine Gleichspannung zerhackt. Die zerhackte Spannung wird sodann über einen Transformator einer Vollweg-Gleichrichterbrücke zugeführt. Die Regelung der Spannung erfolgt hierbei durch Änderung der Frequenz, mit der die Thyristoren der Halbbrückenschaltung angesteuert werden. Außerdem ist ein besonderer Schwingkreis vorgesehen.

Weiterhin ist eine stabilisierte Hochspannungsquelle bekannt, die eine asymmetrische Halbbrückenschaltung mit einem Transformator als Last aufweist, wobei die Sekundärseite dieses Transformators an einer Vollbrückenschaltung liegt (Japanische Offenlegungsschrift 59-17869). Diese stabilisierte Hochspannungsquelle weist eine geregelte Spannungsquelle von kleinerer Kapazität auf, die mit einer herkömmlichen und ungeregelten Dreiphasen-Vollwegspannungsquelle in Serie geschaltet ist. Die Ansteuerung der Transistoren der stabilisierten Spannungsquelle erfolgt hierbei auf herkömmliche Weise, d. h. die beiden Transistoren werden gleichzeitig und mit Impulsen von jeweils derselben Impulsform angesteuert. Lediglich die Breite der Impulse ist hierbei veränderbar, um eine Art von Pulsbreitenmodulation zu erzielen.

Es ist außerdem ein Transverter mit Transformator bekannt, bei dem eine konstante Vormagnetisierung des Transformatorkerns vorgesehen ist (DE-AS 10 64 122). Die Vormagnetisierung ist hierbei konstant und wird mit einem Permanentmagneten oder mit Hilfe einer Batteriespannung erzeugt. Eine fortwährende Flußkompensation ist auf diese Weise nicht erzielbar.

Eine konstante Vormagnetisierung ist auch bei Transformatoren in Schaltnetzteilen bekannt, wo eine Glättungsdrossel von zwei überlagerten Strömen durchflossen wird: eine hohe Gleichstromkomponente und eine Wechselstromkomponente, deren Amplitude meistens klein ist (René Sibille: Ferritwerkstoffe und Kerne für Schaltnetzteile, Elektronik 24/3.12.1982, S. 101/102). Um den Grenzwert des Stroms zu erhöhen, der durch eine gegebene Drossel fließen darf, oder um deren Abmessungen zu reduzieren, werden kleine Permanentmagnete statt eines Luftspalts in den magnetischen Kreis eingefügt. Eine stetige Flußkompensation ist aber auch bei diesen Schaltnetzteilen nicht möglich.

Um eine Vorspannungs-Erregung eines Transformators zu vermeiden und um ein Hauptschaltelement zu schützen, ist es bekannt, eine Hilfsspule vorzusehen, die ein magnetisches Feld erzeugt, welches das magnetische Feld der Primärwicklung, zusammen mit dem Transformator, nur dann kompensiert, wenn der Strom durch die Primärwicklung des Transformators ein Wirbelstrom ist (JP 53 147223 A. In: Patents Abstracts of Japan, Sect. E, Vol. 3, Nr. 8, 1979, E-91). Eine stetige Rückmagnetisierung erfolgt bei dieser bekannten Einrichtung, bei der ein Durchflußwandler realisiert ist, jedoch nicht.

Es ist ferner eine getaktete Stromversorgung bekannt, bei welcher eine kleine Vorspannungswicklung auf einem Transformator vorgesehen ist, so daß beide Seiten des Arbeitsbereichs der B/H-Kurve des Transformatorkerns für eine erhöhte Effektivität ausgewertet werden können (US-PS 4 672 517). Die Flußdichte B wird hierbei von der Sättigungsflußdichte Bsat ferngehalten. Eine automatische Nachführung der Flußdichte ist bei dieser getakteten Stromversorgung jedoch nicht vorgesehen.

Es ist weiterhin ein Gleichstrom-Wechselstrom-Wandler mit einer asymmetrischen Halbbrückenschaltung vorgeschlagen worden, wobei die steuerbaren Schaltmittel der Halbbrückenschaltung mittels phasenverschobener Steuerimpulse von im wesentlichen 180° elektrisch, die alle die gleiche Breite haben, angesteuert werden und wobei sich die Steuerimpulse wenigstens teilweise zeitlich überlappen (DE-OS 36 03 071). Dieser Wandler verbindet die Vorteile einer Vollbrücken-Zerhackerschaltung mit den Vorteilen einer Halbbrücken-Zerhackerschaltung, denn trotz Verwendung einer asymmetrischen Halbbrücken-Zerhackerschaltung wird ein quasi-symmetrischer Betrieb ermöglicht. Im Gegensatz zur herkömmlichen asymmetrischen Brückenschaltung erfolgt hierdurch die Energieübertragung nicht nur während 50 % einer Periode, sondern über maximal die ganze Periode.

Nachteilig ist bei diesem bekannten Wandler, daß der für die automatische Kompensation eines unipolaren Flusses erforderliche Kompensationsstrom, der ohne weiteres den Nennstrom des Wandlers erreicht und überschreitet, nicht oder nur sehr aufwendig an Belastungsänderungen angepaßt werden kann (europäische Patentanmeldung 86116993.6 = Veröffentlichung Nr. 0 231 481, Fig. 6). Dieser Nachteil liegt darin begründet, daß zwischen der asymmetrischen Halbbrückenschaltung und einer Vollweg-Gleichrichterschaltung ein Transformator zwischengeschaltet ist, dessen Primärwicklung als Kompensationswicklung für die Halbbrückenschaltung dient. Wegen des Transformatoreffekts kann die primärseitige Kompensationswicklung nicht die notwendigen Ampèrewindungszahlen bei großer Windungszahl und kleinem Strom aufbringen, so daß bei kleiner Windungszahl ein großer Strom fließen muß.

Eine automatische Nachführung des primärseitigen Kompensationsstroms ist indessen insbesondere dann von großer Wichtigkeit, wenn auf der Sekundärseite des Transformators Leerlaufbetrieb herrscht, was primärseitig zu hohen pulsierenden Strömen führt.

Der Erfindung liegt deshalb die Aufgabe zugrunde, eine Schaltungsanordnung zu schaffen, die bei einer unipolar betriebenen Einrichtung eine schnelle Anpassung des Kompensationsstroms ermöglicht.

Diese Aufgabe wird durch eine Anordnung gelöst, welche wenigstens einen Teil des Stroms, der für die Erzeugung des magnetischen Flusses der Komponente verantwortlich ist, erfaßt und aufgrund dieses erfaßten Stroms der überlagernden magnetischen Fluß erzeugt.

Der mit der Erfindung erzielte Vorteil besteht insbesondere darin, daß Wandler mit asymmetrischer Halbbrückenschaltung bis in sehr hohe Leistungsbereiche hinein betrieben werden können.

Ausführungsbeispiele der Erfindung sind in der Zeichnung dargestellt und werden im folgenden näher beschrieben. Es zeigen:

Fig. 1 einen Gleichstrom-Gleichstrom-Wandler mit einem Transformator, dessen magnetischem Feld ein von einer fremden Energiequelle stammendes Feld überlagert wird;

Fig. 2 eine erfindungsgemäße Einrichtung mit einem eigengespeisten Stromwandler auf der Sekundärseite eines Gleichstrom-Gleichstrom-Wandlers;

Fig. 3 eine zweite erfindungsgemäße Einrichtung mit einem eigengespeisten Stromwandler auf der Primärseite eines Gleichstrom-Gleichstrom-Wandlers;

Fig. 4 eine dritte erfindungsgemäße Einrichtung mit einem eigengespeisten Stromwandler auf der Primärseite eines Gleichstrom-Gleichstrom-Wandlers, wobei das Gleichfeld dieses Stromwandlers kompensiert wird;

Fig. 5 eine vierte erfindungsgemäße Einrichtung, bei welcher eine Kompensationswicklung mit einer energiespeicherfähigen Komponenten verbunden ist.

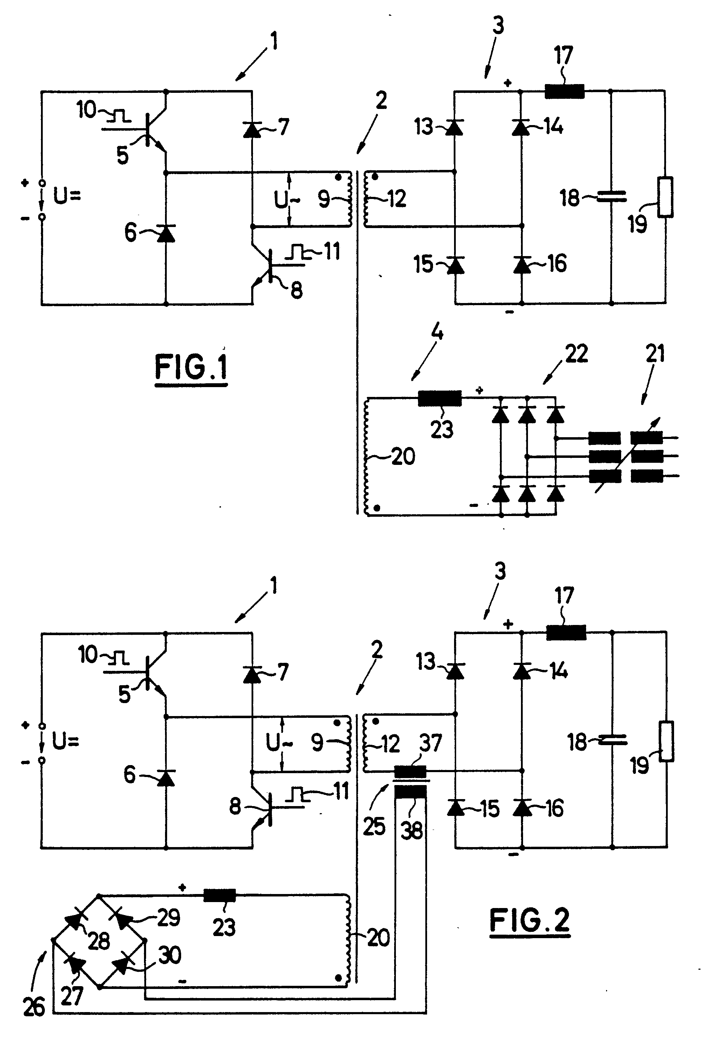

In der Fig. 1 ist eine Anordnung dargestellt, die eine asymmetrische Brückenschaltung bzw. einen Zerhacker 1, einen Transformator 2, einen Vollweggleichrichter 3 und einen fremdgespeisten Stromwandler 4 aufweist. Der Zerhacker 1 zerhackt eine Gleichspannung U = in eine Wechselspannung, die vom Transformator 2 transformiert und vom Vollweggleichrichter 3 gleichgerichtet wird.

Der Zerhacker 1 weist parallel zur Gleichspannung U = einen ersten Querzweig auf, der aus einem Transistor 5 und einer Diode 6 besteht. Parallel zu diesem ersten Querzweig ist ein zweiter Querzweig mit einer Diode 7 un einem hierzu in Reihe liegenden Transistor 8 geschaltet. Der Kollektor des Transistors 5 des ersten Querzweigs ist mit dem positiven Pol der Gleichspannung U = verbunden, während an dem negativen Pol der Gleichspannung U = die Anode der Diode 6 des ersten Querzweigs liegt. Die Kathode dieser Diode 6 ist mit dem Emitter des Transistors 5 verbunden. Bei dem zweiten Querzweig sind die Diode 7 und der Transistor 8 anders geschaltet. Hier liegt die Kathode der Diode 7 an dem positiven Pol der Gleichspannung U =, während der Emitter des Transistors 8 an den negativen Pol der Gleichspannung U = angeschlossen ist. Die Anode der Diode 7 ist dabei mit dem Kollektor des Transistors 8 verbunden. Zwischen den Emitter des Transistors 5 und den Kollektor des Transistors 8 ist außerdem eine Induktivität 9 geschaltet, an der eine Wechselspannung U~ abfällt.

Die Ansteuerimpulse, die auf die Basen der Transistoren 5, 8 gegeben werden, sind in der Fig. 1 symbolisch dargestellt und mit 10 bzw. 11 bezeichnet. Die Breite dieser Ansteuerimpulse 10, 11 ist stets konstant. Unterschiedlich sind lediglich die Zeitpunkte, zu denen die Impulse 10, 11 auftreten, d. h. die Ansteuerimpulse 10 am Transistor 5 können gegenüber den Ansteuerimpulsen 11 am Transistor 8 zeitlich verschoben werden.

Die Induktivität 9 ist die Primärwicklung des Transformators 2, dessen Sekundärwicklung 12 mit dem Vollweggleichrichter 3 verbunden ist, der vier Dioden 13 bis 16 aufweist. Die Sekundärwicklung 12 ist dabei einerseits an die Verbindung zwischen der Anode der Diode 13 und der Kathode der Diode 15 und andererseits an die Verbindung zwischen der Anode der Diode 14 und der Kathode der Diode 16 angeschlossen. An den Vollweggleichrichter 3 ist ein Siebelement mit einer Längsinduktivität 17 und einem Querkondensator 18 angeschaltet, wobei parallel zu diesem Querkondensator 18 eine Last 19 liegt.

Dem durch die Primärwicklung 9 erzeugten Magnetfeld wird ein Gleichmagnetfeld überlagert, wobei für die Erzeugung des Gleichmagnetfelds eine Wicklung 20 vorgesehen ist, die aus einer Fremdwechselspannungsquelle 21 gespeist wird. Zwischen dieser Fremdwechselspannungsquelle 21 und der Wicklung 20 sind ein Vollweggleichrichter 22 und eine Glättungsdrossel 23 geschaltet.

In der Fig. 2 ist eine Schaltungsanordnung dargestellt, die sich im Hinblick auf die Erzeugung des Gleichmagnetfelds von der Schaltungsanordnung gemäß Fig. 1 unterscheidet. Diejenigen Bauelemente, die in den Fig. 1 und 2 identisch sind, sind deshalb mit denselben Bezugszahlen versehen. Im Gegensatz zur Anordnung gemäß Fig. 1 handelt es sich hierbei um eine eigengespeiste Anordnung, bei der die Kompensationsenergie nicht einer Fremdspannungsquelle entnommen wird.

Die Wicklung 20 und die Glättungsdrossel 23 sind in Reihe an einen Vollweggleichrichter 26 geschaltet, der aus vier Dioden 27 bis 30 besteht und von der Sekundärwicklung 38 eines Stromwandlers 25 gespeist wird, dessen Primärwicklung 37 in Reihe zur Sekundärwicklung 12 des Transformators 2 liegt.

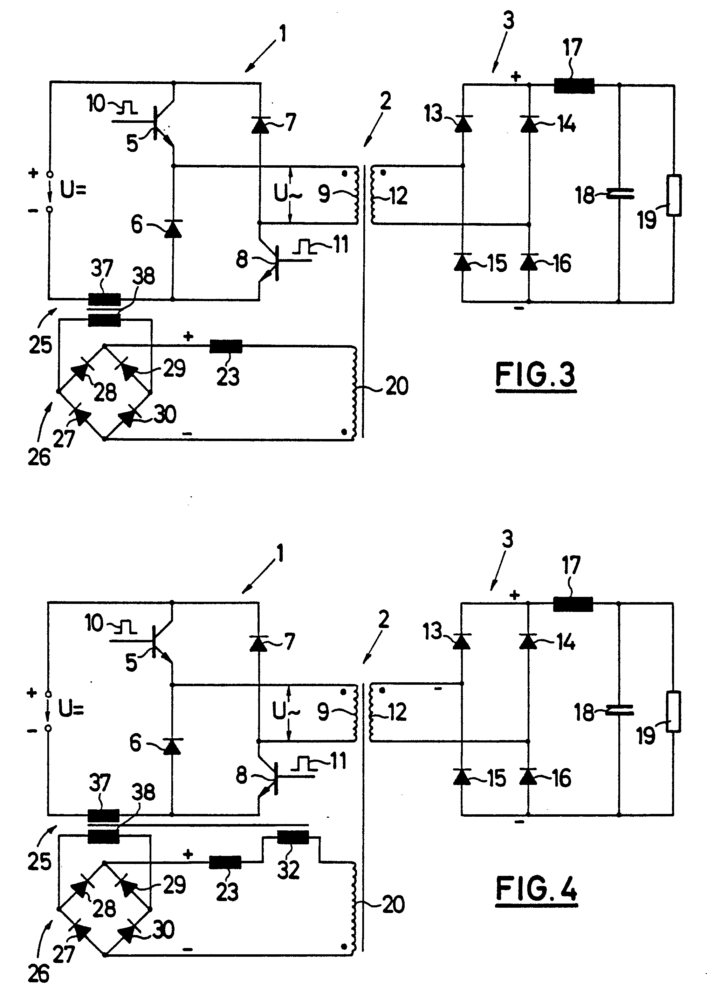

Die Schaltungsanordnung gemäß Fig. 3 unterscheidet sich von der Schaltungsanordnung gemäß Fig. 2 dadurch, daß der Stromwandler 25 mit seiner Primärwicklung 37 auf der Zerhackerseite des Gleichstrom-Gleichstrom-Wandlers angeordnet ist. Diese Primärwicklung 37 ist zwischen den Minuspol der Gleichspannungsquelle U = und die Anode der Diode 6 geschaltet.

In der Fig. 4 ist eine Schaltungsanordnung dargestellt, die sich von der Schaltungsanordnung gemäß Fig. 3 dadurch unterscheidet, daß der Gleichfluß durch den Stromwandler 25 aus der vom Stromwandler 25 gewonnenen Spannung selbst kompensiert wird. Hierzu ist eine Drossel 32 in Reihe zur Drossel 23 und zur Wicklung 20 geschaltet, wobei der magnetische Gleichfluß dieser Drossel 32 dem Gleichflußanteil des Stromwandlers 25 überlagert wird. Das Wicklungsverhältnis des Stromwandlers 25 ist so gewählt, daß eine automatische und lastabhängige Kompensation der Vormagnetisierung erfolgt.

Wie aus den Fig. 1 bis 4 ersichtlich, ist die Polarität der von der Wicklung 20 erzeugten Gleichfelder dem Gleichfeldanteil, der durch die Primärwicklung 9 erzeugt wird, entgegengesetzt. Heirdurch wird der Gleichfeldanteil, der aufgrund der asymmetrischen Halbbrückenschaltung entsteht, stark reduziert oder gar ganz kompensiert. Der Querschnitt der Primärwicklung 9 kann somit erheblich kleiner gemacht werden.

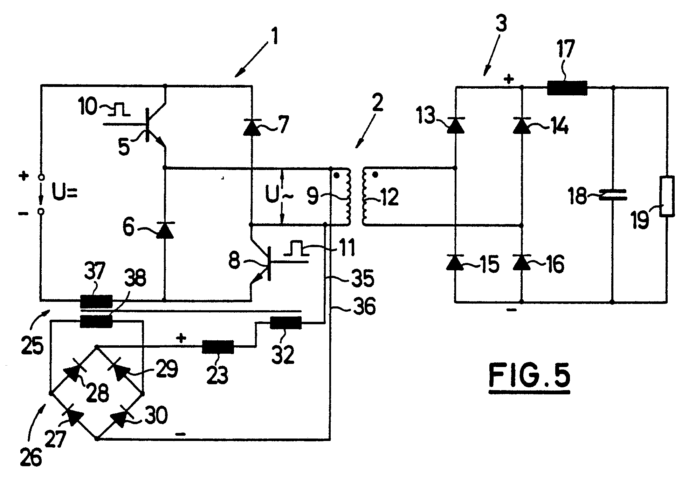

In der Fig. 5 ist eine Schaltungsanordnung gezeigt, die sich von der Schaltungsanordnung gemäß Fig. 4 dadurch unterscheidet, daß auf die Wicklung 20, die den Kompensationsfluß erzeugt, ganz verzichtet wurde. Die Primärwicklung 9 des Transformators 2 übernimmt hierbei selbst die Erzeugung des Kompensationsflusses. Zwischen dem einen Anschluß der Primärwicklung 9 besteht deshalb über eine Leitung 35 eine direkte Verbindung zur Drossel 32, während der andere Anschluß dieser Primärwicklung 9 über eine Leitung 36 mit dem Minuspol des Gleichrichters 26 verbunden ist.

Die Drossel 23 hat die Aufgabe, die Restwelligkeit des von der Vollweg-Brückenschaltung gelieferten Gleichstroms zu verringern. Sie verhindert aber auch einen wechselstrommäßigen Kurzschluß zwischen dem Transformator 2 und dem Stromwandler 25.

Obwohl die Erfindung anhand einer asymmetrischen Halbbrückenschaltung beschrieben wurde, ist sie nicht auf diese beschränkt. Vielmehr kann sie überall dort eingesetzt werden, wo einem Wechselfluß noch ein Gleichfluß überlagert ist bzw. wo ein unipolarer Betrieb herrscht.

**Ansprüche**

1. Einrichtung für eine unipolar betriebene elektrische Schaltungskomponente, die magnetische Energie speichern kann, wobei der von dieser Komponente erzeugte magnetische Fluß durch einen überlagerten magnetischen Fluß verändert wird, **gekennzeichnet durch** eine Anordnung, welche wenigstens einen Teil des Stroms, der für die Erzeugung des magnetischen Flusses der Komponente verantwortlich ist, erfaßt und aufgrund dieses erfaßten Stroms den überlagernden magnetischen Fluß erzeugt.

2. Einrichtung nach Anspruch 1, **dadurch gekennzeichnet,** daß die Anordnung einen Stromwandler (25) mit einer Primär- und einer Sekundärwicklung enthält, wobei die Sekundärwicklung mit einem Gleichrichter verbunden ist, dessen Ausgangs-Gleichspannung den überlagernden magnetischen Fluß erzeugt.

3. Einrichtung nach Anspruch 1, **dadurch gekennzeichnet,** daß die Komponente eine Drossel (9) ist.

4. Einrichtung nach Anspruch 3, **dadurch gekennzeichnet,** daß die Drossel (9) die Primärwicklung eines Transformators (2) ist.

5. Einrichtung nach den Ansprüchen 1 und 4, **dadurch gekennzeichnet,** daß die Anordnung zur Erfassung des Stroms, der für die Erzeugung des Flusses der Komponente verantwortlich ist, wenigstens einen Teil des durch die Primärwicklung (9) des Transformators (2) fließenden Stroms erfaßt.

6. Einrichtung nach den Ansprüchen 1 und 4, **dadurch gekennzeichnet,** daß die Anordnung zur Erfassung des Stroms, der für die Erzeugung des Flusses der Komponente verantwortlich ist, wenigstens einen Teil des durch die Sekundärwicklung (12) des Transformators (2) fließenden Stroms erfaßt.

7. Einrichtung nach Anspruch 1, **dadurch gekennzeichnet,** daß die Komponente (9) mit einer asymmetrischen Halbbrückenschaltung (1) verbunden ist.

8. Einrichtung nach Anspruch 7, **dadurch gekennzeichnet,** daß die asymmetrische Halbbrückenschaltung (1) als Zerhackerteil für einen Gleichstrom-Gleichstrom-Wandler vorgesehen ist, wobei die steuerbaren Schaltmittel (6, 7) der asymmetrischen Halbbrückenschaltung (1) mittels phasenverschobener Steuerimpulse von konstanter Breite gesteuert werden.

9. Einrichtung nach Anspruch 4, **dadurch gekennzeichnet,** daß die Sekundärwicklung (12) des Transformators (2) mit einem Gleichrichter (3) verbunden ist.

10. Einrichtung nach Anspruch 8, **dadurch gekennzeichnet,** daß ein Stromwandler (25) vorgesehen ist, der aus dem Primärkreis des Gleichstrom-Gleichstrom-Wandlers einen Strom entnimmt, der zur Kompensation des Gleichfeldanteils der energiespeichernden Komponente (9) dient.

11. Einrichtung nach Anspruch 8, **dadurch gekennzeichnet,** daß ein Stromwandler (25) vorgesehen ist, der aus dem Sekundärkreis des Gleichstrom-Gleichstrom-Wandlers einen Strom entnimmt, der zur Kompensation des Gleichfeldanteils der energiespeichernden Komponente (9) dient.

12. Einrichtung nach den Ansprüchen 10 oder 11, **dadurch gekennzeichnet,** daß der Stromwandler (25) mit seiner Sekundärwicklung (38) eine Gleichrichterschaltung (26) speist, die über eine Glättungs-Drosselspule (23) mit einer Wicklung (20) auf dem Transformator (2) verbunden ist, die ein Kompensations-Gleichfeld erzeugt.

13. Einrichtung nach einem oder nach mehreren der vorangegangenen Ansprüche, **dadurch gekennzeichnet,** daß auf dem Stromwandler (25) mit einer Primärwicklung (37) und einer Sekundärwicklung (38) eine Kompensationswicklung (32) aufgebracht ist, die vom gleichen Strom wie die den Kompensationfluß erzeugende Wicklung (20) durchflossen wird.

14. Einrichtung nach einem oder nach mehreren der vorangegangenen Ansprüche, **dadurch gekennzeichnet,** daß als Kompensationswicklung die Primärwicklung (9) des Transformators (2) selbst dient, wobei der Kompensationsstrom dem Primärstrom entgegengerichtet ist.

15. Einrichtung nach Anspruch 14, **dadurch gekennzeichnet,** daß der eine Anschluß der Primärwicklung (9) des Transformators (2) mit der Kompensationswicklung (32) für den Stromwandler (25) verbunden ist, während der andere Anschluß dieser Primärwicklung (9) direkt an dem Gleichrichter (26) liegt.

16. Einrichtung nach Anspruch 1, **dadurch gekennzeichnet,** daß der überlagernde Fluß den Fluß der Komponente schwächt.

**FIG.1**

**FIG.2**

FIG.3

FIG.4

**FIG.5**